# EUROPEAN PATENT SPECIFICATION

(11) **EP 4 231 427 B1**
(45) Date of publication and mention of the grant of the patent: **08.07.2026**
(21) Application number: 21880356.7
(22) Date of filing: 28.09.2021
(51) Int. Cl.: H01M 50/342, H01M 50/152, H01M 50/172, H01M 50/186, H01M 50/471

(54) **CYLINDRICAL SECONDARY BATTERY**
ZYLINDRISCHE SEKUNDÄRBATTERIE
BATTERIE SECONDAIRE CYLINDRIQUE

(30) Priority: 16.10.2020 KR 20200134161
(43) Date of publication of application: 23.08.2023
(73) Proprietor: Samsung SDI Co., Ltd., Yongin-si, Gyeonggi-do 17084 (KR)
(72) Inventor: KIM, Dae Kyu, Yongin-si, Gyeonggi-do 17084 (KR); LEE, Bo Ram, Yongin-si, Gyeonggi-do 17084 (KR); KANG, Byung Jo, Yongin-si, Gyeonggi-do 17084 (KR); LEE, Hyun Woo, Yongin-si, Gyeonggi-do 17084 (KR); CHUNG, Seung Hyun, Yongin-si, Gyeonggi-do 17084 (KR); KIM, Shin Jung, Yongin-si, Gyeonggi-do 17084 (KR); LEE, Sang Hyo, Yongin-si, Gyeonggi-do 17084 (KR)
(74) Representative: Marks & Clerk LLP
(86) International application number: PCT/KR2021/013264
(87) International publication number: WO 2022/080708

(56) References cited:
- WO-A1-2019/117339
- WO-A1-2019/117368
- WO-A1-2021/187770
- KR-A- 20130 033 716
- KR-A- 20160 121 106
- KR-A- 20190 040 698
- KR-A- 20200 116 336
- US-A1- 2011 117 407

## Description

### TECHNICAL FIELD

An embodiment of the present invention relates to a cylindrical secondary battery capable of maximizing a gas discharge effect while maintaining operational stability.

### BACKGROUND ART

In general, a cylindrical secondary battery includes a cylindrical electrode assembly, a cylindrical can accommodating the electrode assembly and electrolyte, and a cap assembly coupled to an upper opening of the can to seal the can and to allow current generated from the electrode assembly to flow to an external device.

The cap assembly may include a vent plate that is ruptured to release internal gas when the gas pressure inside the secondary battery rises above a set value. The vent plate is disposed inside a cap up of the cap assembly. During the rupture of the vent plate, the cap up is fixed on the top of the can and the vent plate is covered by the cap up. Accordingly, when the remaining gas is discharged after the rupture, a gas outlet may be blocked or narrowed due to the ruptured vent plate.

The above information disclosed in this Background section is only for enhancement of understanding of the background of the invention and therefore it may contain information that does not constitute prior art.

WO 2019/117339 A1 describes a cylindrical lithium ion secondary battery. For an example, the cylindrical lithium ion secondary battery comprises: a cylindrical can; an electrode assembly received in the cylindrical can; and a cap assembly for sealing the cylindrical can, wherein: the cap assembly comprises a top plate having a notch formed thereon, a support plate disposed in close contact with a lower surface of the top plate and including a first through-hole formed through the center thereof, and a bottom plate electrically connected with the electrode assembly and connected to the lower surface of the top plate through the first through-hole; and the support plate has a strength greater than a strength of the top plate.

WO 2019/117368 A1 describes a cylindrical secondary battery comprising: a cylindrical case; an electrode assembly received in the case; and a cap assembly for sealing the case, wherein the cap assembly comprises a top plate having a notch formed on at least one surface thereof, a middle plate coupled to the top plate and including a first through-hole formed through the center thereof, and a bottom plate electrically connected with the electrode assembly and coupled to the top plate through the first through-hole of the middle plate, and including a surface-treated region formed by surface-treating a surface of the top plate so as to have a concave-convex structure.

WO 2021/187770 A1 describes a cylindrical secondary battery comprising: a cylindrical can; an electrode assembly accommodated in the cylindrical can; and a cap assembly comprising a cap-up, a cap-down arranged under the cap-up, a vent plate which is arranged between the cap-up and the cap-down, is separated from the cap-down, and has at least one notch formed thereon, and an insulating member inserted between the vent plate and the cap-down so as to insulate the vent plate and the cap-down from each other, wherein the cap assembly may further comprise a support member inserted between the vent plate and the cap-down, separated from the insulating member, and arranged on the inner side of the insulating member.

### DESCRIPTION OF EMBODIMENTS

### TECHNICAL PROBLEM

An object of the present invention is to provide a cylindrical secondary battery having a cap assembly that is deformed to maximize gas discharge during discharging of gas while maintaining operational stability by fixing parts of the cap assembly during operation and rupture.

### SOLUTION TO PROBLEM

A cylindrical secondary battery according to an embodiment of the present invention is provided according to the appended claims.

A central portion of the cap down may protrude toward the vent plate to form a connection part coupled to the vent plate, and when the vent plate is operated, the connection part is separated from the cap down.

The connection part may have a welding part welded to the vent plate, and a notch may be formed to be spaced apart from the welding part in an outward direction.

The support plate is shaped of a circular plate and may have a plurality of slits spaced from an outer edge in an inward direction and formed through along a circumferential direction and a circular through hole formed through to be spaced from the slits in an inward direction, and a plurality of second supports having an arc shape may be formed between the slits and the through hole.

The vent plate may be shaped of a circular plate and includes a bending part formed by folding an outer edge thereof, and the outer edge of the support plate may be a first support part inserted into the bending part.

The insulating member may be shaped of a ring and may be disposed between the second support and the cap down.

Notches may be formed in a circumferential direction in regions between the plurality of slits connecting the first support part and a plurality of second support parts, respectively.

The notch of the vent plate is formed adjacent to the bending part, and the notch of the support plate is formed to be spaced apart from the notch of the vent plate in an inward direction.

When the gas is discharged, the support plate may be reversed toward the vent plate, and the vent plate may be separated from the cap assembly.

When the gas is discharged, the cap down may be separated from the cap assembly when the vent plate is separated from the cap assembly.

The support plate and the insulating member may be shaped of a ring having a through hole formed in the center, and the insulating member may be disposed in the direction of the inner circumferential surface of the support plate to insulate the vent plate and the cap down from each other.

The insulating member may have an outer edge coupled to the inner edge of the support plate in an overlapping state.

### ADVANTAGEOUS EFFECTS OF INVENTION

In an embodiment of the present invention, during the operation of a cylindrical secondary battery, a cap up having a notch formed therein is maintained at a state of being fixed to a can, and when gas is discharged, the cap up is ruptured and part of the cap down is ruptured together. In addition, when gas is discharged, as a support plate is deformed, the cap down is also deformed and ruptured to expand the gas discharge passage, and thus, the gas discharge rate and amount can be greatly increased, thereby maximizing a gas discharge effect.

### BRIEF DESCRIPTION OF DRAWINGS

FIG. 1 is a longitudinal cross-sectional view illustrating a general cylindrical secondary battery.
FIG. 2 is a cross-sectional view showing a state of the cap assembly when gas is discharged in the cap assembly according to FIG. 1.
FIG. 3 is a longitudinal cross-sectional view showing a cylindrical secondary battery according to a first embodiment of the present invention.
FIG. 4 is a plan view illustrating a support plate of the cap assembly according to FIG. 3.
FIG. 5 is a cross-sectional view illustrating an operating state of a bent plate in the cap assembly according to FIG. 3.
FIG. 6 is a cross-sectional view illustrating a broken state of a bent plate in the cap assembly of FIG. 5.
FIG. 7 is a cross-sectional view showing a state of the cap assembly when gas is discharged in the cap assembly according to FIG. 6.
FIG. 8 is a cross-sectional view illustrating a final state of the cap assembly according to FIG. 7 after gas is discharged.
FIG. 9 is a cross-sectional view of a cap assembly of a cylindrical secondary battery according to a second embodiment of the present invention.
FIG. 10 is a cross-sectional view showing a broken state of a bent plate in the cap assembly of FIG. 9 is a cross-sectional view of a secondary battery according to an embodiment of the present invention.

### BEST MODE

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

Hereinafter, a cylindrical secondary battery according to an embodiment of the present invention will be described in detail with reference to the accompanying drawings.

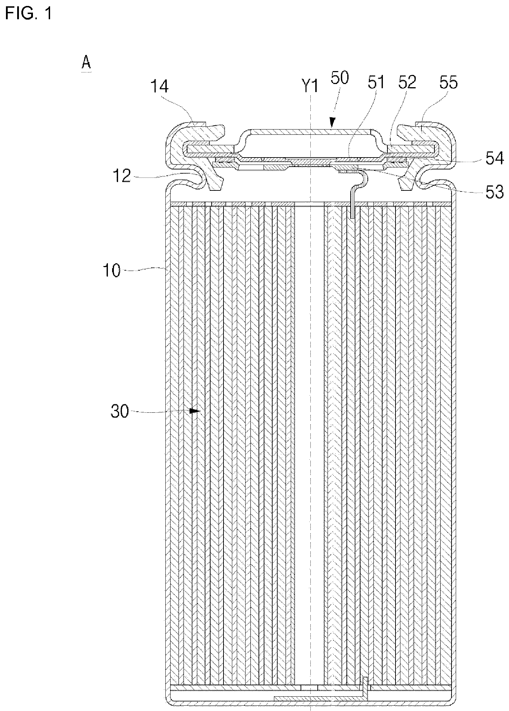

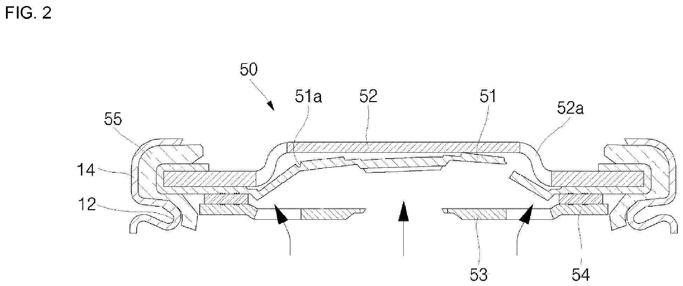

FIG. 1 is a longitudinal cross-sectional view illustrating a general cylindrical secondary battery. FIG. 2 is a cross-sectional view showing a state of the cap assembly when gas is discharged in the cap assembly according to FIG. 1.

As shown in FIGS. 1 and 2, a general cylindrical secondary battery A includes a cylindrical can 10 having an opening formed at one end in the longitudinal direction, an electrode assembly 30 accommodated inside the can, and a cap assembly 50 inserted into the opening. The cap assembly 50 includes a safety vent 51, a cap up 52 disposed above the safety vent 51, and a cap down 53 disposed below the safety vent 51. The cap assembly 50 may further include an insulating member 54 inserted between the safety vent 51 and the cap down 53 to insulate parts other than the centre of the safety vent 51 from coming into contact with the cap down 53, and an insulating gasket 55 that insulates the cap assembly 50 and the can 10 from each other. In the safety vent 51, a part near the longitudinal central axis Y1 of the can 10 is in contact with the cap down 53, and a part supported by the insulating member 54 is spaced apart from the cap down 53. A notch 51a is formed in the safety vent 51. On one open side of the can 10, the lower portion of the cap assembly 50 is recessed inward in a ring shape to form a beading part 12, and the upper portion of the cap assembly 50 is bent inward to form a crimping part 14.

When the pressure inside the secondary battery A rises above a certain pressure level, the safety vent 51 is deformed and the notch 51a is ruptured so that the gas inside the secondary battery A is discharged. The gas passes through the ruptured safety vent 51 and is discharged to the outside of the secondary battery A through a through hole 52a formed in the cap up 52.

However, as shown in FIG. 2, even if the safety vent 51 is ruptured, the safety vent 51 itself still exists between the cap up 52 and the cap down 53, and the cap up 52 also exists in its original position, and thus the safety vent 51 may block a passage through which gas is discharged. In this case, a problem arises in that the gas inside the secondary battery A cannot be quickly discharged. In order to solve this problem, the present invention proposes a new cap assembly structure.

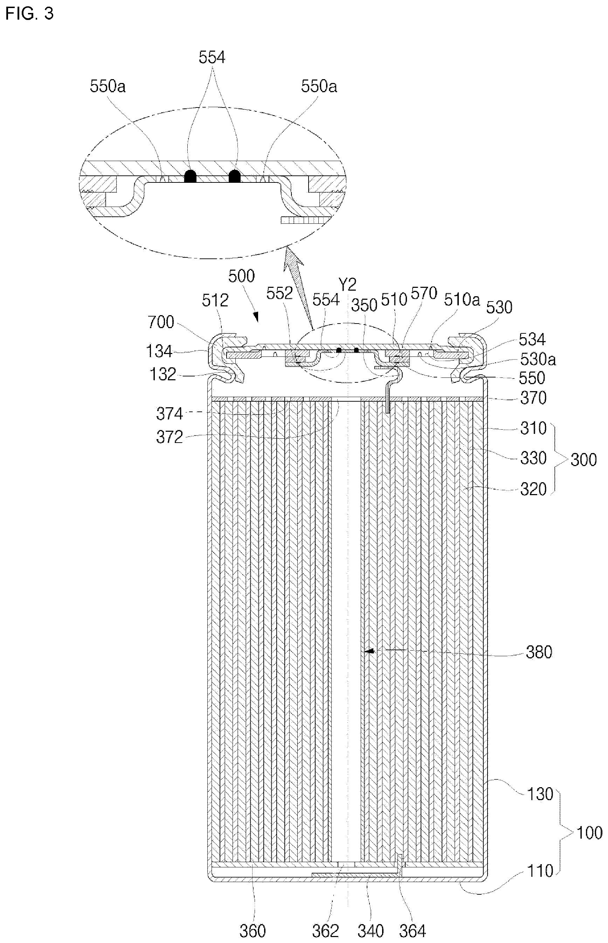

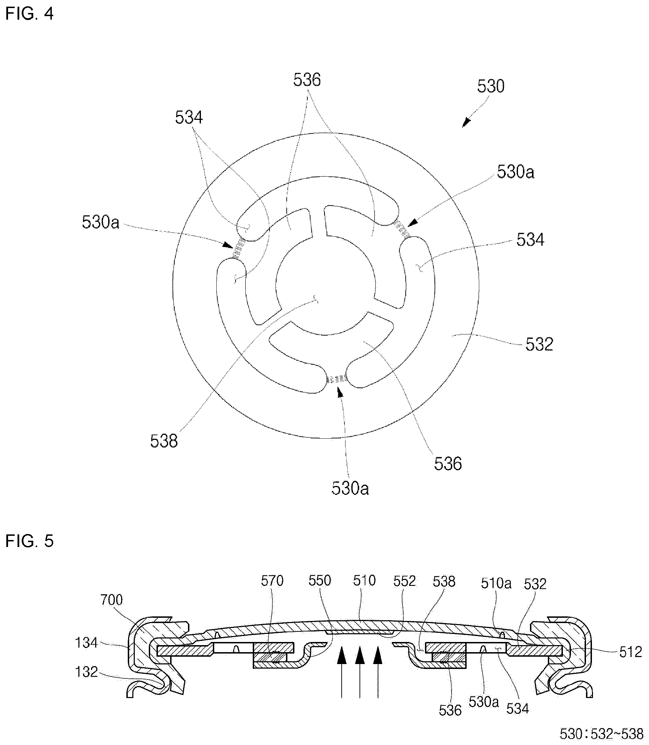

FIG. 3 is a longitudinal cross-sectional view showing a cylindrical secondary battery according to a first embodiment of the present invention. FIG. 4 is a plan view illustrating a support plate of the cap assembly according to FIG. 3.

As shown in FIGS. 3 and 4, the cylindrical secondary battery B according to the first embodiment of the present invention may include a cylindrical can 100, an electrode assembly 300 inserted into the can 100, a cap assembly 500 inserted into one end of the can 100, and an insulating gasket 700 inserted between the can 100 and the cap assembly 500. A center pin 380 may be coupled to the electrode assembly 300.

The can 100 includes a circular bottom portion 110 and a side portion 130 extending upward from the bottom portion 110, and an upper portion of the side portion 130 is open (hereinafter referred to as an opening). In the manufacturing process of the secondary battery B, the electrode assembly 300 is inserted into the can 100 together with an electrolyte through the opening of the can 100. The can 100 may be made of steel, a steel alloy, nickel-plated steel, a nickel-plated steel alloy, aluminum, an aluminum alloy, or an equivalent thereof, but the material is not limited thereto.

The cap assembly 500 is inserted into the opening of the can 100 (which will be described later). The beading part 132 and the crimping part 134 may be formed on the side portion 130 to prevent the inserted cap assembly 500 from escaping to the outside through the opening of the can 100.

The beading part 132 is formed below the cap assembly 500, and is recessed toward the inside of the can 100. The crimping part 134 is formed above the cap assembly 500, and is shaped to be bent toward the inside of the can 100. Since the beading part 132 and the crimping part 134 hold the cap assembly 500 in the vertical direction, the cap assembly 500 may not be separated from the can 100. The electrode assembly 300 is disposed below the cap assembly 500 inside the can 100.

The electrode assembly 300 includes a negative electrode plate 310 coated with a negative electrode active material (e.g., graphite, carbon, etc.), a positive electrode plate 320 coated with a positive electrode active material (e.g., a transition metal oxide (LiCoO2, LiNiO2, LiMn2O4, etc.)), and a separator 330 disposed between the negative electrode plate 310 and the positive electrode plate 320 to prevent a short circuit and to allow only the movement of lithium ions. The negative electrode plate 310, the positive electrode plate 320, and the separator 330 may be wound in a substantially cylindrical shape and accommodated inside the can 100.

The negative electrode plate 310 may be copper (Cu) or nickel (Ni) foil, the positive electrode plate 320 may be aluminum (Al) foil, the separator 330 may be polyethylene (PE) or polypropylene (PP), but the above materials are not limited in the present invention. A negative electrode tab 340 protruding and extending a certain length downward may be welded to the negative electrode plate 310, and a positive electrode tab 350 protruding upward a certain length may be welded to the positive electrode plate 320, but the reverse is also possible. The negative electrode tab 340 may be made of copper or nickel, and the positive electrode tab 350 may be made of aluminum, but the above materials are not limited in the present invention. The negative electrode tab 340 may be welded to the bottom portion 110 of the can 100, and in this case, the can 100 may operate as a negative electrode. Conversely, the positive electrode tab 350 may be welded to the bottom 111 of the can 100, and in this case, the can 100 may operate as a positive electrode.

In addition, a first insulating plate 360 and a second insulating plate 370 may be interposed above and below the electrode assembly 300. The first insulating plate 360 prevents the positive electrode plate 320 from electrically contacting the bottom portion 110 of the can 100, and the second insulating plate 370 prevents the negative electrode plate 310 from electrically contacting the cap assembly 500.

In order to allow gas to move upward when a large amount of gas is generated due to an abnormality of secondary battery, the first insulating plate 360 includes a first hole 362 communicating with the center pin 380 and a second hole 364 through which the negative electrode tab 340 can penetrate. The negative electrode tab 340 may be welded to the bottom portion 110 through the second hole 364.

The second insulating plate 370 includes a first hole 372 through which gas can move to the cap assembly 500 when a large amount of gas is generated due to an abnormality of the secondary battery, and a second hole 374 formed therethrough to allow the positive electrode tab 350 to penetrate. The positive electrode tab 350 may be welded to a cap down 550 to be described later through the second hole 374. A plurality of second holes 374 may be formed to serve as an inlet through which electrolyte is injected into the electrode assembly 300 in an electrolyte injection process.

The center pin 380 is shaped of a hollow circular pipe and may be coupled to the center of the electrode assembly 300. The center pin 380 may be made of steel, a steel alloy, nickel-plated steel, a nickel-plated steel alloy, aluminum, an aluminum alloy, or polybutylene terephthalate, but the material is not limited thereto herein. The center pin 380 serves to suppress deformation of the electrode assembly 300 during charging and discharging of the secondary battery and serves as a passage for gas generated inside the secondary battery. In some cases, the center pin 380 may be omitted.

Meanwhile, as shown in FIG. 3, the cap assembly 500 may include a vent plate 510 exposed to the outside of the can 100, a cap down 550 disposed below the vent plate 510, a support plate 530 disposed between the vent plate 510 and the cap down 550, and an insulating member 570 disposed between the support plate 530 and the cap down 550. In FIG. 3, on the basis of an imaginary central axis Y2 along the longitudinal direction of the can 100, a direction toward the central axis Y2 is defined as an inward direction, and a direction away from the central axis Y2 is defined as an outward direction. In addition, on the basis of FIG. 3, the upper side is defined as the upper direction and the lower side as the lower direction.

As shown in FIG. 3, the vent plate 510 is disposed at the uppermost part of the cap assembly 500 (at the uppermost part on the basis of FIG. 3 and FIG. 5 to be described later). More specifically, the vent plate 510 is disposed at the outermost part that is farthest from the opening of the can 100 in the cap assembly 500. The vent plate 510 functions as a safety vent and may replace the function of a cap up in the cap assembly 500 where the cap up is omitted. The vent plate 510 may be made of the same or similar material as the cap down 550 to be described later. In addition, for a smooth rupture operation of the vent plate 510, the material of the vent plate 510 may have less rigidity than the material of the cap down 550.

The vent plate 510 is shaped of a substantially circular plate, and an outer edge thereof is folded toward the opening of the can 100 to form a bending part 512. The bending part 512 is shaped to surround the outer edge of the support plate 530 to be described later. Referring to FIG. 3, the bending part 512 is shaped to be bent downward.

In addition, the vent plate 510 has a notch 510a formed along the circumferential direction between the bending part 512 and the imaginary central axis Y2. The notch 510a may be formed in a ring shape along the circumferential direction, or a plurality of fan shapes may be arranged at regular intervals. The notch 510a is a portion that is ruptured when gas is discharged, and may be formed on a plate surface of the vent plate 510 facing the opening of the can 100. As such, the vent plate 510 of the present invention does not have a structure corresponding to the through hole 52a formed in the existing cap up 52.

In addition, the vent plate 510 may have a step so that the bending part 512 is disposed below other parts of the plate surface, on the basis of FIG. 3. The inward plate surface may be formed higher than the edge plate surface on the side of the bending part 512, approximately on the basis of the notch 510a. That is, the vent plate 510 has a convex shape in the upward direction, on the basis of FIG. 3.

As shown in FIGS. 3 and 4, the support plate 530 is formed by processing a substantially circular plate material. In the support plate 530, a plurality of slits 534 penetrates a portion spaced from an outer edge of the circular plate shape in an inward direction toward the central axis Y2. The slits 534 have an arc shape, and a plurality of slits 534 are arranged to be spaced apart at regular intervals. A substantially circular through hole 538 penetrates a portion spaced from the slits 534 in an inward direction.

The outer edge of the support plate 530 has a predetermined width (width in a radial direction) and is defined as a first support part 532. A part or all of the first support part 532 is covered by the bending part 512 of the vent plate 510. A region between the slits 534 and the through hole 538 is defined as a second support part 536. Since the slits 534 have an arc shape and the through holes 538 are circular, the second support part 536 has a plurality of arc shapes. The first support part 532 and the second support part 536 are connected to the region between the slits 534. A notch 530a is formed between the slits 534 connecting the first support part 532 and the second support part 536, respectively. The notch 530a is formed more inward than the notch 510a of the vent plate 510. When gas is discharged, the second support part 536 is deformed in an upward direction, on the basis of the notch 530a, and is inverted, thereby quickly discharging gas. However, the support plate 530 may maintain a deformed state without being separated from the cap assembly. The support plate 530 may be made of the same or similar material as the insulating member 570. Alternatively, the cap down 550 may be made of the same or similar material.

In addition, the first support part 532 and second support part 536 have a step with respect to each other. On the basis of FIG. 3 (and FIG. 5 to be described later), the upper surface of the second support part 536 is located higher than the upper surface of the first support part 532. That is, on the basis of FIG. 3, the support plate 530 is convex in an upward direction. This structure corresponds to the stepped structure of the vent plate 510.

Therefore, on the basis of FIG. 3, the first support part 532 is in a state in which a portion of the lower surface facing the opening of the can 100 is wrapped by the bending part 512, and most of the upper surface is in contact with the lower surface of the vent plate 510. The second support part 536 is in a state in which the entire upper surface thereof is in contact with the lower surface of the vent plate 510. The second support part 536 is located inward from the notch 510a of the vent plate 510. In this state, the cap down 550 is disposed with the insulating member 570 interposed therebetween.

As shown in FIG. 3, the cap down 550 is shaped of a substantially circular plate and is disposed below the vent plate 510. In the cap down 550, the central portion of the disc protrudes upward in a substantially cylindrical shape and is in close contact with the lower surface of the vent plate 510. Conversely, the cap down 550 has a shape in which an edge is bent downward from a central portion. A portion in close contact with the vent plate 510 is defined as a connection part 552. The edge of the circular plate of the cap down 550 is disposed on the lower surface of the second support part 536 of the support plate 530 with the insulating member 570 therebetween. In this state, the connection part 552 and the vent plate 510 are welded and fixed. Only the welding part 554 to be welded is connected to the vent plate 510, and other parts are not in contact with the vent plate 510. A notch 550a may be formed along a radial direction on the connection part 552 spaced apart from the welding part 554 in an outward direction. When gas is discharged, a portion of the notch 550a on the connection part 552 is ruptured.

The insulating member 570 allows the support plate 530 and the cap down 550 to be maintained at a separation state, and serves to insulate the support plate 530 and the cap down 550 from each other. Accordingly, the insulating member 570 may be formed in the shape of a circular ring having a predetermined width when viewed from the top. For example, the insulating member 570 is made of polyethylene (PE), polypropylene (PP), ethylene propylene diene monomer (M-class) rubber (EPDM rubber), or an equivalent thereof, but is not limited thereto. The insulating member 570 may be welded to the support plate 530 and the cap down 550 by ultrasonic welding or laser welding.

As described above, when the vent plate 510, support plate 530, cap down 550, and insulating member 570 are combined to form the cap assembly 500, the bending part 512 of the vent plate 510 covers the first support part 532 of the support plate 530. Accordingly, the lower surface of the second support part 536 of the support plate 530 and the vent plate 510 come into contact with each other. Here, the support plate 530 and the cap down 550 are coupled with the insulating member 570 therebetween. In addition, the connection part 552 of the cap down 550 is welded to the lower surface of the vent plate 510. This state is defined as the assembly state of cap assembly 500.

In the cylindrical secondary battery having the above-described configuration, states of various components of the cap assembly according to the gas discharge process will now be described (components not shown in the drawings will be described with reference to FIG. 3).

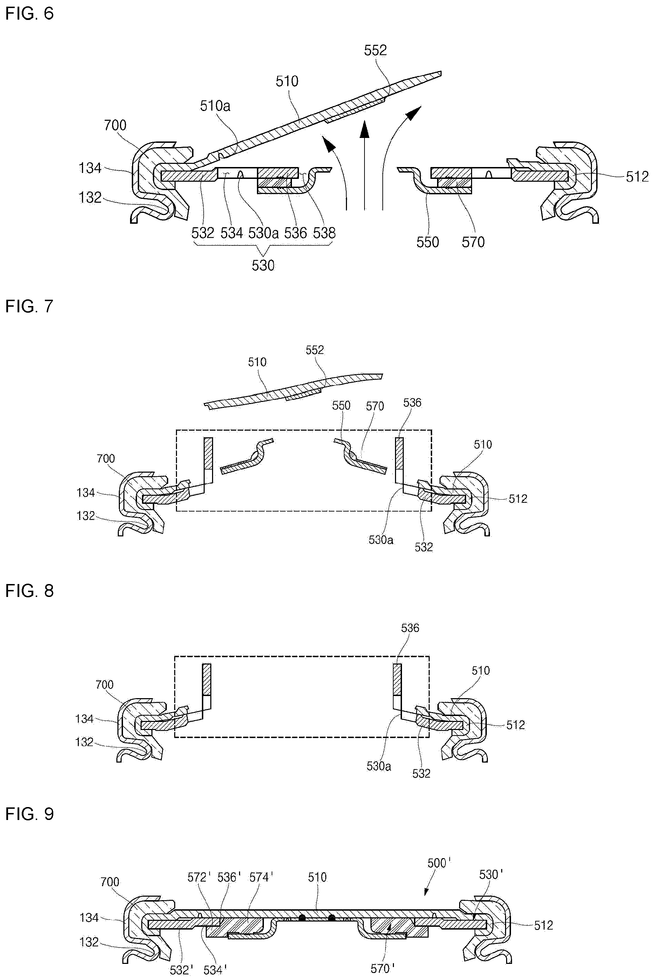

FIG. 5 is a cross-sectional view illustrating an operating state of a bent plate in the cap assembly according to FIG. 3. FIG. 6 is a cross-sectional view illustrating a broken state of a bent plate in the cap assembly of FIG. 5. FIG. 7 is a cross-sectional view showing a state of the cap assembly when gas is discharged in the cap assembly according to FIG. 6. FIG. 8 is a cross-sectional view illustrating a final state of the cap assembly according to FIG. 7 after gas is discharged.

As shown in FIG. 5, when an abnormal pressure is generated inside the cylindrical secondary battery B due to overcharging or the like, the vent plate 510 operates. While the vent plate 510 is operating, the vent plate 510 is convexly deformed upward by the gas trapped inside the secondary battery B, and thus the connection part 552 of the cap down 550 is separated, on the basis of the notch 550a.

When the internal gas pressure gradually increases and becomes greater than the predetermined rupture pressure, the notch 510a of the vent plate 510 is ruptured and a part of the vent plate 510 moves upward, as shown in FIG. 6 (Even if the notch is ruptured, the bending part remains connected to the support plate).

When the gas is instantaneously discharged as the gas discharge passage is opened by the rupture of the vent plate 510, the second support part 536 of the support plate 530 may be inverted upward by the strong gas pressure, on the basis of the notch 530a, as shown in FIG. 7. Since the notch 530a is a relatively weak part compared to other parts, deformation occurs in this part. As shown in FIG. 7, since the second support part 536 pushes the vent plate 510 upward while being pushed upward, the vent plate 510 is completely ruptured and may be separated from the cap assembly 500. The notch 510a of the vent plate 510 is preferably disposed outwardly rather than the notch 530a of the support plate 530 so as to allow the vent plate 510 to be easily separated by the second support part 536. That is, the reason of the foregoing is that the notch 530a of the support plate 530 is easily inverted and deformed in an upward direction as the notch 530a moves away from the bending part 512. When the vent plate 510 is separated, a portion of the inward direction of the vent plate 510, on the basis of the notch 510a, is removed, and a portion of the outward direction of the vent plate 510, on the basis of the notch 510a, and the bending part 512 remain connected to the support plate 530. At the same time, the cap down 550 is also pushed upward by the strong gas pressure, and the insulating member 570 is also damaged and may be separated from the support plate 530 (The insulating member is melted or damaged by the strong gas pressure and high temperature.). As the vent plate 510 and the cap down 550 are separated from the cap assembly 500, the cross-sectional area through which gas can be discharged increases, so that the gas can be discharged more quickly.

As the gas is discharged, the vent plate 510 and the cap down 550 are separated from the cap assembly 500 and removed, and the support plate 530 remains in a deformed state, and thus, the cap assembly 500 finally has a shape as shown in FIG. 8.

In the above-described embodiment, an example in which the support plate 530 is composed of the first support part 532 and the second support part 536, and, when gas is discharged, the second support part 536 is deformed in the upward direction for rupture and opening of the vent plate 510, has been described. Hereinafter, an embodiment in which the support plate 530 has a ring shape will be described (A detailed description of the same configuration as the above-described embodiment will be omitted.).

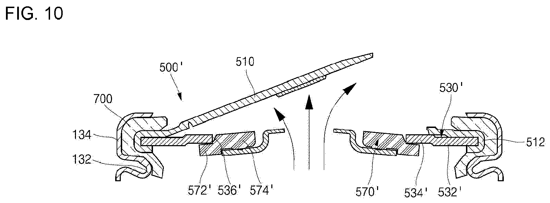

FIG. 9 is a cross-sectional view of a cap assembly of a cylindrical secondary battery according to a second embodiment of the present invention. FIG. 10 is a cross-sectional view showing a broken state of a bent plate in the cap assembly of FIG. 9 is a cross-sectional view of a secondary battery according to an embodiment of the present invention.

As shown in FIG. 9, a support plate 530' is a ring-shaped plate material having a through hole 536' formed therein. The support plate 530' is installed in such a way that the bending part 512 of the vent plate 510 surrounds an outer edge of the support plate 530'. This portion covered by the bending part 512 is referred to as a first support part 532'. The upper surface of the support plate 530' is in contact with the lower surface of the vent plate 510, and the lower surface is in contact with the upper surface of the outer edge of the insulating member 570'. This portion is referred to as a second support part 534'. The upper surface of the second support part 534' may be formed to be higher than the upper surface of the first support part 532' corresponding to the shape of the vent plate 510.

The insulating member 570' is an approximately ring-shaped insulator having a predetermined width (a length in the left-right direction (the direction perpendicular to the central axis Y2)) on the basis of FIG. 9 and a thickness (a length in the up-down direction (the direction of the central axis Y2)) on the basis of FIG. 9. The insulating member 570' is positioned on the inner circumferential surface of the support plate 530'. That is, the insulating member 570' is positioned more inward than the support plate 530'. The insulating member 570' includes a first insulating member 572' having an upper surface in contact with the lower surface of the second support part 534', which is the inner edge of the support plate 530', and a second insulating part 574' extending inwardly from the first insulating part 572' and having an upper surface in contact with the lower surface of the vent plate 510 and a lower surface in contact with the upper edge surface of the cap down 550. The first insulating part 572' is coupled to the second support part 534' in an overlapping state. The second insulating part 574' is formed at a position corresponding to the position of the first support part 532 of the support plate 530 in the above-described first embodiment. The support plate 530' is insulated and supported by the first insulating part 572', and the vent plate 510 is insulated and supported by the second insulating part 574'. Therefore, the insulating member 570' insulates the vent plate 510 and the cap down 550 from each other and insulates the support plate 530' and the cap down 550 from each other. The first insulating part 572' is coupled to the support plate 530', and the second insulating part 574' is coupled to the vent plate 510 and the cap down 550, by welding or the like. Since a distance between the cap down 550 and the vent plate 510 is greater than a distance between the cap down 550 and the support plate 530', the thickness of the second insulating part 574' is greater than that of the first insulating part 572'.

As shown in FIG. 10, when the vent plate 510 ruptures and deforms upward during gas discharge, the insulating member 570' attached to the vent plate 510 is pulled up and the cap down 550 moves together. As the cap down 550 moves, the operating rupture scatter of the vent plate 510 increases, and the remaining portion of the vent plate 510 is easily ruptured, and thus gas can be discharged quickly. The finally remaining portion after the gas is discharged, may be the support plate 530', like in the first embodiment.

As described above, when the gas inside the cylindrical secondary battery is discharged, the support plate or cap down may be deformed due to the pressure of gas in the direction in which the gas is discharged, and the operating scatter of the vent plate increases. Therefore, after being ruptured, the vent plate is easily separated from the cap assembly, and as a result, a gas discharge passage is opened without being blocked by the remaining parts, and thus the gas can be rapidly discharged. In addition, since a cap up is omitted and the vent plate performs the functions of a safety vent and cap-up, there is an advantage in that the gas can be quickly discharged by rupture and separation of the vent plate.

While the foregoing embodiment has been provided for carrying out the secondary battery according to the present invention, it should be understood that the embodiment described herein should be considered in a descriptive sense only and not for purposes of limitation, and various changes in form and details may be made therein without departing from the scope of the invention as defined by the following claims.

### INDUSTRIAL APPLICABILITY

The present invention can be widely applied to secondary batteries and fields such as various devices or vehicles in which secondary batteries are mounted.

## Claims

1. A cylindrical secondary battery (B) comprising:
a cylindrical can (100) having one opened end to form an opening;
an electrode assembly (300) accommodated in the cylindrical can (100); and
a cap assembly (500) including:
a vent plate (510) which is disposed on the outermost side in the direction away from the opening, wherein the vent plate (510) includes a bending part (512) formed by folding an outer edge thereof, and wherein the vent plate (510) has at least one notch (510a),
a cap down (550) which is disposed to be spaced apart from the vent plate (510) in the direction of the opening and which is electrically connected to the electrode assembly (300),
a support plate (530) which is disposed between the vent plate (510) and the cap down (550) so as to be coupled to the vent plate (510), and
an insulating member (570) which is inserted between the support plate (530) and the cap down (550) to insulate the support plate (530) and the cap down (550) from each other,
wherein the notch (510a) of the vent plate (510) is formed adjacent to the bending part (512), and a notch (530a) of the support plate (530) is formed to be spaced apart from the notch (510a) of the vent plate (510) in an inward direction, and
wherein, when the gas inside the can (100) is discharged toward the opening, the vent plate (510) is ruptured to be separated from the cap assembly (500).

2. The cylindrical secondary battery (B) of claim 1, wherein a central portion of the cap down (550) protrudes toward the vent plate (510) to form a connection part (552) coupled to the vent plate (510), and when the vent plate (510) is operated, the connection part (552) is separated from the cap down (550).

3. The cylindrical secondary battery (B) of claim 2, wherein the connection part (552) has a welding part (554) welded to the vent plate (510), and a notch (550a) is formed along a radial direction on the connection part (552) to be spaced apart from the welding part (554) in an outward direction.

4. The cylindrical secondary battery (B) of claim 3, wherein the support plate (530) is shaped of a circular plate and has a plurality of slits (534) spaced from an outer edge in an inward direction and formed through along a circumferential direction and a circular through hole (538) formed through to be spaced from the slits (534) in an inward direction, and a plurality of second support parts (536) having an arc shape are formed between the slits (534) and the through hole (538).

5. The cylindrical secondary battery (B) of claim 4, wherein the vent plate is shaped of a circular plate, and the outer edge of the support plate (530) is a first support part (532) inserted into the bending part (512).

6. The cylindrical secondary battery (B) of claim 5, wherein the insulating member (570) is shaped of a ring and is disposed between the second support parts (536) and the cap down (550).

7. The cylindrical secondary battery (B) of claim 5, wherein notches (530a) of the support plate (530) are formed in a circumferential direction in regions between the plurality of slits (534) connecting the first support part (532) and the plurality of second support parts (536), respectively.

8. The cylindrical secondary battery (B) of claim 1, wherein when the gas is discharged, the support plate (530) is configured to push the vent plate (510) upward, and the vent plate (510) is separated from the cap assembly (500).

9. The cylindrical secondary battery (B) of claim 3, wherein when the gas is discharged, the cap down (550) is separated from the cap assembly (500) when the vent plate (510) is separated from the cap assembly (500).

## Patentansprüche

1. Zylindrische Sekundärbatterie (B), umfassend:
eine zylindrische Dose (100) mit einem geöffneten Ende, um eine Öffnung zu bilden;
eine in der zylindrischen Dose (100) untergebrachte Elektrodenbaugruppe (300); und
eine Deckelbaugruppe (500), einschließlich:
einer Entlüftungsplatte (510), die an der äußersten Seite in der Richtung weg von der Öffnung angeordnet ist, wobei die Entlüftungsplatte (510) ein Biegeteil (512) einschließt, das durch Falten eines äußeren Rands davon gebildet wird, und wobei die Entlüftungsplatte (510) mindestens eine Kerbe (510a) aufweist,
eines unteren Deckels (550), der angeordnet ist, um in der Richtung der Öffnung von der Entlüftungsplatte (510) beabstandet zu sein und der elektrisch mit der Elektrodenbaugruppe (300) verbunden ist,
einer Stützplatte (530), die zwischen der Entlüftungsplatte (510) und dem unteren Deckel (550) angeordnet ist, um mit der Entlüftungsplatte (510) gekoppelt zu werden, und
eines Isolierelements (570), das zwischen der Stützplatte (530) und dem unteren Deckel (550) eingefügt ist, um die Stützplatte (530) und den unteren Deckel (550) voneinander zu isolieren,
wobei die Kerbe (510a) der Entlüftungsplatte (510) angrenzend an das Biegeteil (512) gebildet ist und eine Kerbe (530a) der Stützplatte (530) gebildet ist, um von der Kerbe (510a) der Entlüftungsplatte (510) in einer Richtung nach innen beabstandet zu sein, und
wobei, wenn das Gas im Inneren der Dose (100) in Richtung der Öffnung abgelassen wird, die Entlüftungsplatte (510) aufgerissen wird, um von der Deckelbaugruppe (500) getrennt zu werden.

2. Zylindrische Sekundärbatterie (B) nach Anspruch 1, wobei ein mittlerer Abschnitt des unteren Deckels (550) in Richtung der Entlüftungsplatte (510) vorragt, um ein mit der Entlüftungsplatte (510) gekoppeltes Verbindungsteil (552) zu bilden, und wenn die Entlüftungsplatte (510) betätigt wird, wird das Verbindungsteil (552) von dem unteren Deckel (550) getrennt.

3. Zylindrische Sekundärbatterie (B) nach Anspruch 2, wobei das Verbindungsteil (552) ein mit der Entlüftungsplatte (510) verschweißtes Schweißteil (554) aufweist und eine Kerbe (550a) entlang einer radialen Richtung an dem Verbindungsteil (552) gebildet ist, um von dem Schweißteil (554) in einer Richtung nach außen beabstandet zu sein.

4. Zylindrische Sekundärbatterie (B) nach Anspruch 3, wobei die Stützplatte (530) als eine kreisförmige Platte geformt ist und eine Vielzahl von Schlitzen (534), die von einem äußeren Rand in einer Richtung nach innen beabstandet sind und entlang einer Umfangsrichtung hindurch gebildet sind, und eine kreisförmige Durchgangsbohrung (538), die in einer Richtung nach innen hindurch gebildet ist, um von den Schlitzen (534) beabstandet zu sein, und eine Vielzahl zweiter Stützteile (536) mit einer Bogenform, die zwischen den Schlitzen (534) und der Durchgangsbohrung (538) gebildet sind, aufweist.

5. Zylindrische Sekundärbatterie (B) nach Anspruch 4, wobei die Entlüftungsplatte als eine kreisförmigen Platte geformt ist und der äußere Rand der Stützplatte (530) ein erstes Stützteil (532) ist, das in das Biegeteil (512) eingefügt ist.

6. Zylindrische Sekundärbatterie (B) nach Anspruch 5, wobei das Isolierelement (570) als ein Ring geformt ist und zwischen den zweiten Stützteilen (536) und dem unteren Deckel (550) angeordnet ist.

7. Zylindrische Sekundärbatterie (B) nach Anspruch 5, wobei Kerben (530a) der Stützplatte (530) in einer Umfangsrichtung in Bereichen zwischen der Vielzahl von Schlitzen (534) gebildet sind, die jeweils das erste Stützteil (532) und die Vielzahl von zweiten Stützteilen (536) verbinden.

8. Zylindrische Sekundärbatterie (B) nach Anspruch 1, wobei, wenn das Gas abgelassen wird, die Stützplatte (530) konfiguriert ist, um die Entlüftungsplatte (510) nach oben zu drücken, und die Entlüftungsplatte (510) von der Deckelbaugruppe (500) getrennt wird.

9. Zylindrische Sekundärbatterie (B) nach Anspruch 3, wobei, wenn das Gas abgelassen wird, der untere Deckel (550) von der Deckelbaugruppe (500) getrennt wird, wenn die Entlüftungsplatte (510) von der Deckelbaugruppe (500) getrennt wird.

## Revendications

1. Batterie secondaire cylindrique (B) comprenant :
une boîte cylindrique (100) présentant une extrémité ouverte pour former une ouverture ;
un ensemble d'électrodes (300) logé dans le boîtier cylindrique (100) ; et
un ensemble de capuchon (500) incluant :
une plaque d'aération (510) disposée sur le côté extérieur dans la direction opposée à l'ouverture, dans lequel la plaque d'aération (510) inclut une partie de pliage (512) formée par le pliage d'un bord extérieur de celle-ci, et dans lequel la plaque d'aération (510) comporte au moins une encoche (510a),
un capuchon inférieur (550) qui est disposé à être espacé de la plaque d'aération (510) dans la direction de l'ouverture et qui est électriquement connecté à l'ensemble d'électrodes (300),
une plaque de support (530) qui est disposée entre la plaque d'aération (510) et le capuchon inférieur (550) de manière à être couplée à la plaque d'aération (510), et
un élément isolant (570) qui est inséré entre la plaque de support (530) et le capuchon inférieur (550) pour isoler la plaque de support (530) et le capuchon inférieur (550) l'un de l'autre,
dans lequel l'encoche (510a) de la plaque d'aération (510) est formée à proximité de la partie pliée (512), et une encoche (530a) de la plaque de support (530) est formée de manière à être espacée de l'encoche (510a) de la plaque d'aération (510) dans une direction intérieure, et
dans lequel, lorsque le gaz contenu dans la boîte (100) est déchargé vers l'ouverture, la plaque d'évent (510) est rompue pour être séparée de l'ensemble du capuchon (500).

2. Batterie secondaire cylindrique (B) selon la revendication 1, dans laquelle une partie centrale du capuchon inférieur (550) fait saillie vers la plaque d'aération (510) pour former une partie de connexion (552) couplée à la plaque d'aération (510), et lorsque la plaque d'aération (510) est actionnée, la partie de connexion (552) est séparée du capuchon inférieur (550).

3. Batterie secondaire cylindrique (B) selon la revendication 2, dans laquelle la partie de connexion (552) comporte une partie de soudure (554) soudée à la plaque d'évent (510), et une encoche (550a) est formée dans une direction radiale sur la partie de connexion (552) pour être espacée de la partie de soudure (554) dans une direction extérieure.

4. Batterie secondaire cylindrique (B) selon la revendication 3, dans laquelle la plaque de support (530) présente la forme d'une plaque circulaire et comporte une pluralité de fentes (534) espacées d'un bord extérieur dans une direction intérieure et formées de part en part le long d'une direction circonférentielle et un trou traversant circulaire (538) formé de manière à être espacé des fentes (534) dans une direction intérieure, et une pluralité de deuxièmes parties de support (536) présentant une forme d'arc sont formées entre les fentes (534) et le trou traversant (538).

5. Batterie secondaire cylindrique (B) selon la revendication 4, dans laquelle la plaque d'évent présente la forme d'une plaque circulaire, et le bord extérieur de la plaque de support (530) est une première partie de support (532) insérée dans la partie de pliage (512).

6. Batterie secondaire cylindrique (B) selon la revendication 5, dans laquelle l'élément isolant (570) présente la forme d'un anneau et est disposé entre les deuxièmes parties de support (536) et le capuchon inférieur (550).

7. Batterie secondaire cylindrique (B) selon la revendication 5, dans laquelle des encoches (530a) de la plaque de support (530) sont formées dans une direction circonférentielle dans les régions situées entre la pluralité de fentes (534) reliant la première partie de support (532) et la pluralité de deuxièmes parties de support (536), respectivement.

8. Batterie secondaire cylindrique (B) selon la revendication 1, dans laquelle, lorsque le gaz est déchargé, la plaque de support (530) est configurée pour pousser la plaque d'aération (510) vers le haut, et la plaque d'aération (510) est séparée de l'ensemble de capuchon (500).

9. Batterie secondaire cylindrique (B) selon la revendication 3, dans laquelle, lorsque le gaz est déchargé, le capuchon inférieur (550) est séparé de l'ensemble de capuchon (500) lorsque la plaque d'aération (510) est séparée de l'ensemble de capuchon (500).
